# EUROPEAN PATENT APPLICATION

(11) **EP 2 261 272 A2**
(43) Date of publication of application: **15.12.2010**
(21) Application number: 10178145.8
(22) Date of filing: 03.10.2005
(51) Int. Cl.: C08G 18/36, C08G 18/42, C09J 175/06

(54) **Reactive hot-melt adhesive**

(30) Priority: 04.10.2004 US 615668 P
(62) Divisional of application: 05256173.5
(71) Applicant: Rohm and Haas Company, Philadelphia, Pennsylvania 19106-2399 (US)
(72) Inventor: Kesselmayer, Mark A., Harleysville, PA 19438 (US); Richards, James L., Woodstock, IL 60098 (US)
(74) Representative: Kent, Venetia Katherine

(57) **Abstract**

A hot melt adhesive composition is disclosed that includes a combination of one or more high molecular weight components, high levels of one or more multifunctional polyols, one or more organic compounds having a least one hydroxy functional group and high levels of one or more polyisocyanates, with each corresponding ingredient adjusted in specified ways that provides an unexpected balance of properties required for bonding structural components.

## Description

The present invention relates to a hot melt adhesive, particularly a reactive hot melt adhesive composition, a method for forming the hot melt adhesive composition, and a method for bonding substrates, including but not limited to structural components, using the hot melt adhesive composition. More particularly, the invention relates to a hot melt adhesive composition including a combination of one or more high molecular weight components, high levels of one or more multifunctional polyols and high levels of one or more polyisocyanates, with each corresponding ingredient adjusted in specified ways to give a desired balance of properties.

Hot melt adhesives are known to be desirable for fast curing times and for curing in the absence of aqueous or solvent media which provide fluidity to other types of adhesives. Moisture-reactive hot melt adhesives that are based on an isocyanate group-containing urethane pre-polymer can be designed to yield a relatively low melt viscosity for facile handling and application; reaction with moisture augments the final properties of the adhesive. However, moisture-reactive hot melt adhesives may not be adequate in certain situations, namely, at resistance to slow deformation when subjected to sustained stress over time (such resistance is known in the art as "creep resistance").

U. S. Pat. No. 5,939,488 discloses fast setting polyurethane hot melt adhesives comprising low hydroxyl number and high molecular weight polyester diols. These adhesives achieve good "setting speed" (less than 30 seconds) and are designed for bonding leather/rubber components used in the manufacture of shoes. However, their "green strength" (*i.e*. adhesive strength prior to completion of the reaction with moisture) and creep resistance is not taught and the adhesives do not provide sufficient green strength creep and or creep resistance for use in certain other structural components. One advantage of reactive hot melt adhesives is the rate at which green strength develops which determines the rate at which bonded structural components can be further processed. It is therefore desirable to provide alternative reactive hot melt adhesives that have the required balance of green strength, cure time and creep resistance for bonding structural components.

The inventors discovered alternative moisture-reactive reactive hot melt adhesive compositions having improved creep resistance and having good adhesion to substrates. It has been found that a hot melt adhesive composition including a combination of one or more high molecular weight components, high levels of one or more multifunctional polyols and high levels of one or more polyisocyanates, with each corresponding ingredient adjusted in specified ways provides an unexpected balance of properties required for bonding structural components.

Accordingly, the invention provides a reactive hot melt adhesive composition comprising: (a) one or more polymers having a weight average molecular weight between 30,000 and 100,000; (b) one or more multifunctional polyols; (c) one or more organic compounds having at least two hydroxy groups; and (d) one or more polyisocyanates, wherein the ratio of isocyanate groups to hydroxyl groups (NCO/OH) is between 2.1 and 6.0 and wherein the amount of free isocyanate groups is greater than 3.5 percent by weight, based on the total weight of the composition.

The invention provides a method for preparing a reactive hot melt adhesive comprising the step of admixing chemical components comprising: (a) one or more polymers having a weight average molecular weight between 30,000 and 100,000; (b) one or more multifunctional polyols; (c) one or more organic compounds having at least two hydroxy groups; and (d) one or more polyisocyanates, wherein the ratio of isocyanate groups to hydroxyl groups (NCO/OH) is between 2.1 and 6.0 and wherein the amount of free isocyanate groups is greater than 3.5 percent by weight, based on the total weight of the composition.

The invention also provides a method for bonding one or more substrates comprising the steps of:
(a) forming a forming a reactive hot melt adhesive by admixing components comprising: (i) one or more polymers having a weight average molecular weight between 30,000 and 100,000; (ii) one or more multifunctional polyols; (iii) one or more organic compounds having at least two hydroxy groups; and (iv) one or more polyisocyanates, wherein the ratio of isocyanate groups to hydroxyl groups (NCO/OH) is between 2.1 and 6.0 and wherein the amount of free isocyanate groups is greater than 3.5 percent by weight, based on the total weight of the composition;
(b) heating the reactive hot melt adhesive;
(c) applying the hot melt adhesive to a first substrate in the presence of moisture;
(d) contacting the applied hot melt adhesive with at least a second substrate; and
(e) cooling the bonded hot melt adhesive.

The composition usefully employed in accordance with the present invention is a moisture-reactive hot-melt adhesive composition. By "moisture-reactive" is meant herein that the composition contains isocyanate groups which are capable of reacting with water desirably to effect an increase in the molecular weight of the adhesive composition and/or effect cross-linking of the adhesive composition so as to increase the strength properties of the adhesive subsequent to being contacted with water. By "hot-melt" is meant herein that the adhesive which may be a solid, semi-solid, or viscous mass can be advantageously heated to provide a fluid adhesive of a viscosity suitable for application to and adhesion to substrates.

The reactive hot melt composition includes one or more high molecular weight polymer components. Suitable high molecular weight components include, but are not limited to for example, polymers having a weight average molecular weight (Mw) between 30,000 and 100,000, including polymers having a Mw between 45,000 and 100,000. Examples of high molecular weight polymers include, but are not limited to for example, any suitable thermoplastic polymers such as (meth)acrylic polymers, copolymers and terpolymers, polyurethane polymers and copolymers, polysiloxane polymers, polyesters, polyvinyl polymers, polystyrene (PS), PS copolymers, divinylbenzene polymers and copolymers, copolymers and terpolymers of ethylene, polyetheramides, polyethers and blends of such thermoplastic polymers. Other suitable high molecular weight polymer component include hydroxy functionality of at least one. High molecular weight polymer components having hydroxyl functionality have hydroxyl numbers from 0 to 15. A description of how to determine hydroxyl number for a composition is found in texts well known in the art, for example, G. Woods, The ICI Polyurethanes Book, 2nd Ed., ICI Polyurethanes, Netherlands (1990). Suitable examples include, but are not limited to for example, polyvinylalcohols (PVOH) having Mw less than 20,000, PVOH copolymers, poly(hydroxy)acrylate polymers, polyvinylether/polyvinylacohol copolymers, thermoplastic polymers whose chemical skeletons are derived from a biomass, polymer blends thereof and polymer blends of the thermoplastic polymers having hydroxy functionality and thermoplastic polymers having no hydroxy functionality. The reactive hot melt (RHM) composition includes one or more high molecular weight polymer components in an amount from 0 to 30 percent by weight, based on the total weight of the composition.

The reactive hot melt composition also includes one or more multifunctional polyols. The term "multifunctional polyols" refers to polyols bearing at least two hydroxyl groups. Suitable multifunctional polyols include, but are not limited to for example, diols, triols, tetraols, pentaols, hexaols, polyester polyols, polyether polyols, polyetheramine polyols polymer blends thereof, and mixtures thereof. The multifunctional polyol component is present in amounts from 0 to 30 percent by weight, based on the total weight of the RHM adhesive composition. Suitable polyol components include, but are not limited to for example, polymers having a weight average molecular weight (Mw) between 400 and 5,000, including polymers having a Mw between 2,000 and 4,000. Other examples of suitable polyols include oligomers and polymers prepared from hydropropanoic acid and other fermentation products of a biomass (e.g. sugars).

Polyester polyols suitable for use in the present invention include those formed from diacids, or their monoester, diester, or anhydride counterparts, and diols. The diacids may be saturated C₄-C₁₂aliphatic acids, including branched, unbranched, or cyclic materials, and/or C₈-C₁₅aromatic acids. Examples of suitable aliphatic acids include, for example, succinic, glutaric, adipic, pimelic, suberic, azelaic, sebacic, 1,12-dodecanedioic, 1,4-cyclohexanedicarboxylic, and 2-methylpentanedloic acids. Examples of suitable aromatic acids include, for example, terephthalic, isophthalic, phthalic, 4,4'-benzophenone dicarboxylic, 4,4'-diphenylamine dicarboxylic acids, and mixtures thereof. The diols may be C₂-C₁₂branched, unbranched, or cyclic aliphatic diols. Examples of suitable diols include, for example, ethylene glycol, 1,3-propylene glycol, 1,2-propylene glycol, 1,4- butandediol, neopentyl glycol, 1,3-butandediol, hexanediols, 2-methyl-2,4- pentanediol, cyclohexane-1,4-dimethanol, 1,12-dodecanediol, and mixtures thereof. Other suitable polyester polyols usefully employed in accordance with present invention include polyols prepared from acid dimers and/or dimeric diols. Mixtures of the various suitable polyester polyols are also suitable for use in the present invention.

According to one embodiment of the invention, the polyester polyols are semi-crystalline to crystalline. According to a separate embodiment, the polyester polyols are amorphous, which means that they do not crystallize under ambient conditions. Both the semi-crystalline and amorphous polyols preferably have a weight-average molecular weight ("Mw") as measured by gel permeation chromatography, from 250 to 8,000, including from 250 to 5,000, and have an acid number less than 5, including an acid number less than 2. Amorphous polyester polyols are preferably aromatic such as those formed from phthalic anhydride and diethylene glycol. Amorphous polyether polyols may be prepared by the reaction of an alkylene oxide with a polyhydric alcohol. Mixtures of the various suitable semi-crystalline and amorphous polyester polyols are also suitable for use in the present invention. The amount of at least one amorphous or semi-crystalline polyester is between 30 to70 % by weight, based on the weight of the adhesive composition.

Polyether polyols suitable for use in the present invention include polyoxy-C₂-C₆-alkylene polyols, including branched and unbranched alkylene groups. Examples of suitable polyether polyols include, for example, polyethylene oxide, poly(1,2- and 1,3-propyleneoxide), poly(1,2-butyleneoxide), random or block copolymers of ethylene oxide and 1,2-propylene oxide, and mixtures thereof. The preferred polyether polyol is polypropylene glycol. The polyether polyol preferably has a weight average molecular weight ("Mw") as measured by gel permeation chromatography, from 400 to 8,000, more preferably from 1,000 to 3,000. Mixtures of the various suitable polyether polyols are also suitable for use in the present invention.

The reactive hot melt composition also includes one or more organic compounds having at least two hydroxy groups. Suitable organic compounds having a weight average molecular weight (Mw) between 500 and 10,000, including polymers having a Mw between 500 and 5,000. The organic components having at least two hydroxyl functionalities have hydroxyl numbers from 1 to 250, including hydroxyl numbers from 1 to 100, from 1 to 50 and from 1 to 15. Suitable organic compounds include, but are not limited to for example, diols, triols, tetraols, pentaols, hexaols, esters of unsaturated fatty acids, esters of saturated fatty acids, fats, oils, cottonseed oils, linseed oils, olive oils, palm oils, corn oils, peanut oils, soybean oils, and castor oils. Oils include oils modified by hydrogenation and polyoxyalkene polymers, such as polyoxyethylene polymers and include for example hydrogenated oils, partially hydrogenated oils, and polyoxyethylene oils.

The reactive holt melt composition also includes one or more polyisocyanates bearing at least two isocyanate groups. Suitable polyisocyanates include but are not limited to for example aromatic, aliphatic, cycloaliphatic polyisocyanates and combinations thereof, such as, for example, m-phenylene diisocyanate, 2,4-toluene diisocyanate, 2,6-toluene diisocyanate, hexamethylene diisocyanate, tetramethylene diisocyanate, 1,4-cyclohexane diisocyanate, hexahydrotoluene diisocyanate, 1,5-naphthalene diisocyanate, 1-methoxy-2,4-phenylene diisocyanate, 4,4'- diphenylmethane diisocyanate, 2,4'-diphenylmethane diisocyanate, 4,4'-biphenylene diisocyanate, 3,3'- dimethoxy-4,4'-biphenyl diisocyanate, 3,3'-dimethyl-4,4'-biphenyl diisocyanate, 3,3'-dimethyl- 4,4'-diphenylmethane diisocyanate, isophorone diisocyanate, 4,4',4"-triphenylmethane triisocyanate, 1,3,5-triisocyanato benzene, 2,4,6-triisocyanato toluene, 4,4'-dimethyldiphenylmethane-2,2',5,5'-teratisocyanate, polymethylene polyisocyanate, polyphenylene polyisocyanate, 2,4,6-toluene triisocyanate, 4,4'-dimethyl-diphenylmethane tetraisocyanate, pre-polymers having number average molecular weights Mn less than 2000 and bearing at least two isocyanate groups, and mixtures thereof. The polyisocyanate component is present in amounts from 15 to 30 percent by weight, based on the total weight of the RHM adhesive composition.

The ratio of isocyanate groups to hydroxyl groups (NCO/OH) in the reactive hot melt adhesive compositions groups from all of the admixed components taken on an equivalents basis is between 2.1 and 6.0, including from 2.2 to 4.0, including greater than 3.0 and including 3.5 or greater; in order to provide an adhesive composition with an excess of isocyanate groups.

Another useful method of characterizing the admixture of the components of the present invention is the free NCO content. The free NCO content is the weight %, based on the total weight of the admixture, of free NCO. Free NCO is the amount of NCO in excess of the amount needed to match the OH groups in the admixture on a 1:1 equivalents basis. In the practice of the present invention, suitable compositions have free NCO content of at least 3.5%, including 3.5% to 20%, and including 3.5% to 7%. Without being limited to theory, it is believed that increasing the NCO/OH ratio and the free NCO content leads to a cured adhesive composition with higher concentration of cross-links, which in turn leads to improved creep resistance.

The components are mixed by conventional means, preferably in an inert, dry atmosphere, and reacted, preferably at a temperature of 50°C to 120°C, for a time sufficient to convert essentially all hydroxy groups to corresponding urethane groups. The polymer components are solubilized by heating and mixing with at least one of the non-isocyanate containing components before the reaction with the polyisocyanate. Optionally, a catalyst such as, for example, a tertiary amine or a tin-based catalyst may be admixed with the components, either before, during, or after the reaction to form the adhesive composition. When such an optional catalyst is used, the usual use level is less than 0.3% by weight based on the total weight of the admixed components. The adhesive composition of this invention, which is an NCO-functional adhesive, is stored, preferably under an inert, dry atmosphere until use.

The hot-melt adhesive composition may be formulated by admixing additional conventional ingredients such as chain extenders, fillers, pigments, tackifiers, plasticizers, rheology modifiers, etc. with due regard to the reactivity of the NCO- functional groups, which is desirably maintained. According to one embodiment, the amount of chain extenders added is between 0 and 10 % by weight, based on the weight of the RHM adhesive composition.

According to one embodiment of the present invention, the components include at least one hydroxyl-functional triglyceride or at least one trifunctional polyol of one or more fatty acids. Hydroxyl-functional triglycerides of fatty acids have the chemical formula CH ₂OR¹-CHOR¹-CH₂OR³, where R ¹, R², and R³are residues of fatty acids, which may be the same or different, at least one of which has hydroxyl functionality.

In the method for bonding substrates of the present invention, the moisture-reactive hot-melt adhesive is heated in order to achieve a viscosity suitable for transporting the adhesive, such as by pumping or gravity feed, to the application equipment and for the application of the adhesive to a first substrate in the presence of moisture. The temperature should be high enough to achieve a suitable viscosity but low enough to avoid excessive degradation or other undesirable effects on the adhesive. Typical useful temperatures are in the range of 40°C to 200°C, preferably 50°C to 160°C, and more preferably 100°C to 150°C. The application of the adhesive may be effected by conventional means such as, for example, heated spray applicator, heated bead applicator, heated nozzle, and heated roll coater, to form a continuous or discontinuous film of adhesive, as desired. The adhesive may typically be applied at a level of 50 to 250 g/sq. meter (4-20 g/sq ft) although in cases where one of the substrates is a fabric it may be applied at a level as low as 1-50 g/sq. meter. It is contemplated that the moisture, *i.e.*, water, which is anticipated to effect reaction with the NCO-functional groups thereby increasing the ultimate cohesive strength of the applied adhesive, may be, for example, a result of ambient humidity, artificially increased or controlled humidified air, a mist of water droplets, or a spray of liquid water contacting the applied adhesive. It is further contemplated that the moisture may be augmented by other NCO-functional group-reactive ingredients such as, for example, amines.

The applied adhesive is contacted by a second substrate to provide a composite construction. The composite construction so formed is optionally subjected to applied pressure such as by passing it between rollers to effect increased contact of the substrates with the adhesive and the composite construction is then cooled or allowed to cool. In another embodiment the adhesive may be simultaneously or sequentially applied to two surfaces of the first substrate, which adhesive-coated surfaces are then simultaneously or sequentially bonded to two further substrates, which may be the same or different. It is further contemplated that the composite construction may subsequently be bonded to other substrate(s) using the same or a different adhesive before or after the process described herein. The first and second substrates to be bonded in the method of this invention may be the same or different and include, for example, metal, wood, consolidated wood products, paper, woven and non-woven fabrics, and plastics which may have smooth or structured surfaces and are provided in the form of rolls, sheets, films, foils, etc. They include, for example, lauan mahogany plywood, impregnated paper, extruded polystyrene foam, expanded polystyrene foam, fiberglass reinforced polyester, polyester fabric, high or low pressure laminate, plywood, aluminum, steel; PVC, and engineering plastics.

In some embodiments of the present invention, the substrates that are bonded are relatively thin and flat, and in such cases the composite article is a called a laminate or laminated structure.

The following examples are presented to illustrate the invention and the results obtained by the test procedures.

### Test Procedures

### Preparation of specimens:

Specimens are sandwich laminates of oriented strand board (OSB), adhesive, expanded polystyrene foam, adhesive, and OSB, prepared according to procedures published by the International Conference of Building Officials (ICBO), in "Acceptance Criteria For Sandwich Panel Adhesives," #AC05.

### Hand Failure:

A sandwich laminate specimen is cut to width of approximately 5 to 7.5 cm (2 to 3 inches). One piece of OSB is secured, and force is exerted by hand on the other piece of OSB until the sandwich comes apart, and the failure mode is observed. The "pass" failure mode is for the polystyrene foam to separate. The "fail" failure mode is adhesive failure of the adhesive at any of the bonding surfaces.

### Creep:

Following ICBO procedure AC05 section 8.6.1, sandwich specimens are subjected to stress of 345 kilopascal (50 psi), and the deformation is observed. "Pass" performance requires average deformation of less than 0.002 cm per cm (0.002 inch per inch) in the first hour and average deformation of less than 0.005 cm per cm (0.005 inch per inch) for the duration of the test. Samples are tested according to section 8.6.3, at 70°C (158°F) for one week.

### High Temperature Creep:

Following ICBO acceptance criteria AC05-8.6, sandwich specimens were subjected to stress of 345 kPas (50 psi) and the deformation observed. To pass, creep is limited to 0.002 in/in (0.0508 mm/mm) in the first hour with an average of 0.005 in/in (0.127 mm/mm) for the duration of the test. Samples are tested according to section 8.6.3; 158°F (70°C) for one week when measuring the creep of wooden substrates or at 182°F (83°C) for one week where bonded metal surfaces are involved.

### High Temperature Lap Shear:

Following ICBO acceptance criteria AC05-8.4, conditioned sandwich specimens were equilibrated to a glue line temperature of 182°F (83°C) and tested for lap shear strength. To pass, test specimens must retain at least 80% of the lap shear strength as specimens tested with the glue line at 73°F (23.7°C).

### Accelerated Aging:

Following ICBO acceptance criteria AC05-7.2, sandwich specimens were subjected to submersion in water at room temperature for 48 hours followed by drying for eight hours at 145°F (63°C). The samples are subsequently submitted to three cycles of soaking at room temperature for 16 hours and drying for eight hours at 145°F (63°C). The samples are conditioned for seven days according to section 6.0 prior to testing. To pass, samples must retain at least 80% of the original bond strength of test specimens not subjected to accelerated aging.

### EXAMPLES

Hot melt adhesive compositions of the invention were prepared as follows. To a 1.5 L resin kettle were added the polyol raw materials, followed by the defoamer, if required. The mixture was then heated to 150°C under a nitrogen atmosphere. After holding at that temperature for 2 hours, the mixture was cooled to 115°C and a full vacuum (27-29 in. Hg) was applied to remove extraneous moisture. After one hour, the temperature was reduced to 105-110°C and the vacuum was released with dry nitrogen. The polyisocyanate was then added. The vacuum was reapplied and the temperature equilibrated to 100°C. After one hour, the vacuum was released with dry nitrogen and the Jeffcat DMDEE was added. The reaction was allowed to continue under nitrogen, at 100°C, for one additional hour.

Using the adhesive compositions of the invention (Examples 1-21), several sandwich laminate samples were prepared.

### Raw Materials:

Thermoplastic polymer A: Acrylic terpolymer with a Tg of 75°C and a weight average molecular weight of 50,000.

Thermoplastic polymer B: Acrylic terpolymer with a Tg of 45°C and a weight average molecular weight of 60,000.

| **Raw Material** | **Ex. 1** | **Ex. 2** | **Ex. 3** | **Ex. 4** | **Ex. 5** | **Ex. 6** | **Ex. 7** | **Ex. 8** | **Ex. 9** | **Ex. 10** | **Ex. 11** | **Ex. 12** | **Ex. 13** |
|---|---|---|---|---|---|---|---|---|---|---|---|---|---|
| | 12752 | 2817 | 2818 | 2819 | 2821 | 2788 | 12883 | 12875 | 128XX | 12682 | 2789 | 12775 | 128XX |
| Dynapol S1402 | 231.10 | 178.45 | 231.09 | 126.01 | 231.03 | 178.49 | 233.63 | 231.45 | 231.11 | - | - | - | 115.76 |
| | | | | | | | | | | | | | |
| Dynapol S320 | - | - | - | - | - | - | - | - | - | - | 157.50 | - | - |
| | | | | | | | | | | | | | |
| Mor-Ester 49014 | - | - | - | - | - | - | - | - | - | 157.59 | - | - | - |
| | | | | | | | | | | | | | |
| Stepanpol PH 56 | 173.19 | 84.03 | 84.03 | 84.03 | 84.01 | 84.02 | 175.03 | 164.47 | 116.38 | - | - | 289.91 | 166.11 |
| | | | | | | | | | | | | | |
| Stepanpol PD-200 | - | - | - | - | - | - | - | - | - | 52.52 | - | - | - |
| | | | | | | | | | | | | | |
| Stepanpol PD-56 | - | - | - | - | - | - | - | - | - | - | 157.54 | - | - |
| | | | | | | | | | | | | | |
| Desmophen S105-30 | 420.41 | 596.78 | 518.87 | 650.07 | 584.18 | 609.18 | 424.96 | 420.51 | 423.97 | 478.58 | 555.59 | 321.09 | 421.72 |
| | | | | | | | | | | | | | |
| Dynacoll 7390 | - | - | - | - | - | - | - | - | - | - | - | 178.66 | 115.76 |
| | | | | | | | | | | | | | |
| Dynacoll 7340 | - | - | - | - | - | - | - | - | - | 157.60 | - | - | - |
| | | | | | | | | | | | | | |
| Castor Oil | 38.04 | 23.31 | 34.73 | 11.40 | 10.73 | 23.70 | 38.46 | 38.15 | 42.40 | 28.74 | 26.09 | 33.79 | 42.17 |
| | | | | | | | | | | | | | |
| Chain Extender | - | - | - | - | - | - | - | - | 17.46 | - | - | - | - |
| | | | | | | | | | | | | | |
| Foamblast 20F | - | - | - | - | - | - | 0.11 | - | 0.11 | - | - | 0.11 | 0.11 |
| | | | | | | | | | | | | | |
| 4,4' MDI | 187.27 | 167.42 | 181.27 | 178.49 | 140.04 | 154.60 | 175.03 | 195.42 | 218.68 | 174.98 | 153.18 | 226.68 | 188.49 |
| | | | | | | | | | | | | | |
| Catalyst | 0.66 | 0.63 | 0.63 | 0.63 | 0.63 | 0.66 | 0.66 | 0.66 | 0.66 | 0.63 | 0.66 | 0.66 | 0.66 |
| | | | | | | | | | | | | | |
| **% NCO** | 3.88 | 3.82 | 3.88 | 3.82 | 2.70 | 2.98 | 3.48 | 4.18 | 3.51 | 3.37 | 2.73 | 4.64 | 3.69 |
| **NCO/OH** | 2.83 | 2.75 | 3.00 | 3.00 | 2.50 | 2.55 | 2.66 | 3.00 | 2.00 | 2.5 | 2.25 | 3.67 | 2.57 |
| Creep (w-w, w-Al) | | | | | | | | | | | | | |
| **Accelerated aging** | | | | | | | | | | | | | |
| **High temperature Shear** | | | | | | | | | | | | | |

| **Raw Material** | **Ex. 13** | **Ex. 14** | **Ex. 15** | **Ex. 16** | **Ex. 17** | **Ex. 18** |
|---|---|---|---|---|---|---|
| | 12889 | 12891 | 12893 | 128XX | 12767 | 12769 |
| Dyanpol S1402 | 231.47 | 232.79 | 232.48 | 231.06 | 179.61 | 126.63 |
| | | | | | | |
| Stepanpol PH 56 | 123.97 | 172.09 | 178.42 | 230.17 | 341.42 | 253.27 |
| | | | | | | |
| Desmophen S105-30 | 420.46 | 421.55 | 422.70 | 420.66 | 317.70 | 464.32 |
| | | | | | | |
| Acclaim 3300N | 97.96 | - | - | - | - | - |
| | | | | | | |
| Arcol HLT 240 | - | 26.83 | - | - | - | - |
| | | | | | | |
| Multranol 9170 | - | - | 18.56 | - | - | - |
| | | | | | | |
| Foamblast 20F | 0.11 | 0.11 | 0.11 | 0.11 | 0.11 | 0.11 |
| | | | | | | |
| 4,4' MDI | 176.14 | 196.73 | 197.84 | 142.90 | 162.61 | 154.50 |
| | | | | | | |
| Mondur MR light | - | - | - | 26.63 | 52.82 | 51.50 |
| | | | | | | |
| Catalyst | 0.66 | 0.66 | 0.66 | 0.66 | 0.66 | 0.66 |
| | | | | | | |
| % NCO | 3.77 | 4.18 | 4.18 | | | |
| NCO/OH | 3.00 | 2.96 | 2.93 | | | |
| Creep | | | | | | |
| **Accelerated aging** | | | | | | |
| **High Temperature Shear** | | | | | | |

| **Raw Material** | **Ex. 19** | **Ex. 20** | **Ex. 21** | **Ex. 22** |
|---|---|---|---|---|
| | 12673 | 12680 | 12816 | 12818 |
| Polypropylene Glycol (OH# 56) | 309.59 | 333.75 | 159.32 | 125.53 |
| | | | | |
| Desmophen S105-30 | 326.30 | 306.45 | 192.5 | 192.5 |
| | | | | |
| Thermoplastic resin A | 210.00 | - | - | - |
| | | | | |
| Thermoplastic resin B | - | 262.50 | 121.00 | 121.00 |
| | | | | |
| Castor Oil | 35.35 | 12.94 | 6.76 | 19.52 |
| | | | | |
| lrganox 245 | ? | ? | 0.17 | 0.17 |
| | | | | |
| Defoamer | ? | ? | 0.06 | 0.06 |
| | | | | |
| 4,4' MDI | 168.76 | 134.36 | 70.42 | 91.45 |
| | | | | |
| Catalyst | | | 0.33 | 0.33 |
| | | | | |
| **% NCO** | 2.45 | 2.17 | 2.13 | 3.39 |
| **NCO/OH** | 1.83 | 2.01 | 1.98 | 2.53 |
| Creep | | | | |
| **Accelerated aging** | | | | |
| **High Temperature Lap Shear** | | | | |

## Claims

1. A reactive hot melt adhesive composition comprising:
(a) one or more organic compounds having at least two hydroxyl groups, a weight average molecular weight between 500 and 10,000, and hydroxyl numbers from 1 to 100;
(b) one or more multifunctional polyols selected from the group consisting of triols, tetraols, pentaols, hexaols, polyester polyols, polyether polyols, polyetheramine polyols, polymer blends thereof, and mixtures thereof;
(c) one or more polymers having a weight average molecular weight between 30,000 and 100,000; and
(d) one or more polyisocyanates;
wherein the ratio of isocyanate groups to hydroxyl groups (NCO/OH) is between 2.1 and 6.0 and wherein the amount of free isocyanate groups is greater than 3.5 percent by weight, based on the total weight of the composition.

2. The composition of claim 1 , wherein the one or more multifunctional polyols are triols, polymer blends thereof, and mixtures thereof.

3. The composition of claim 1, wherein the one or more multifunctional polyols are tetraols, polymer blends thereof, and mixtures thereof.

4. The composition of claim 1, wherein the one or more multifunctional polyols are pentaols, polymer blends thereof, and mixtures thereof.

5. The composition of any one of the preceding claims, wherein said multifunctional polyols comprise up to 30 percent by weight of the total weight of the composition.

6. The composition of any one of the preceding claims, wherein said polymers comprise up to 30 percent by weight of the total weight of the composition.

7. A method for preparing a reactive hot melt adhesive comprising the steps of admixing components comprising:
(a) one or more organic compounds having at least two hydroxyl groups, a weight average molecular weight between 500 and 10,000, and hydroxyl numbers from 1 to 100;
(b) one or more multifunctional polyols selected from the group consisting of triols, tetraols, pentaols, hexaols, polyester polyols, polyether polyols, polyetheramine polyols, polymer blends thereof, and mixtures thereof;
(c) one or more polymers having a weight average molecular weight between 30,000 and 100,000; and
(d) one or more polyisocyanates;
wherein the ratio of isocyanate groups to hydroxyl groups (NCO/OH) is between 2.1 and 6.0, and wherein the amount of free isocyanate groups is greater than 3.5 percent by weight, based on the total weight of the composition.

8. A method for bonding one or more substrates comprising the steps of:
(a) forming a reactive hot melt adhesive by admixing components comprising: (i) one or more organic compounds having at least two hydroxyl groups, a weight average molecular weight between 500 and 10,000, and hydroxyl numbers from 1 to 100; (ii) one or more multifunctional polyols selected from the group consisting of triols, tetraols, pentaols, hexaols, polyester polyols, polyether polyols, polyetheramine polyols, polymer blends thereof, and mixtures thereof; (iii) one or more polymers having a weight average molecular weight between 30,000 and 100,000; and (iv) one or more polyisocyanates; wherein the ratio of isocyanate groups to hydroxyl groups (NCO/OH) is between 2.1 and 6.0 and wherein the amount of free isocyanate groups is greater than 3.5 percent by weight, based on the total weight of the composition;
(b) heating the hot melt adhesive;
(c) applying the hot melt adhesive to a first substrate in the presence of moisture;
(d) contacting the applied hot melt adhesive with at least a second substrate; and
(e) cooling the bonded hot melt adhesive.

9. The method according to claim 8, wherein the first and second substrates are the same or different and are selected from the group consisting of: metal, wood, consolidated wood products, paper, woven and non-woven fabrics, plastics and composites thereof; the substrates having smooth or structured surfaces and are provided in the form of rolls, sheets, films, foils selected from the group consisting of: plywood, wood particle board, wood composites, impregnated paper, extruded polystyrene foam, expanded polystyrene foam, fiberglass reinforced polyester, polyester fabric, high or low pressure laminate, plywood, aluminum, steel, PVC, and engineering plastics and combinations thereof.
